# DEMANDE DE BREVET EUROPEEN

(11) **EP 3 316 202 A1**
(43) Date de publication de la demande: **02.05.2018**
(21) Numéro de dépôt: 16306412.4
(22) Date de dépôt: 27.10.2016
(51) Int. Cl.: G06Q 20/04, G06Q 30/04, G06Q 30/06, G06Q 10/10

(54) **PROCEDE ET SYSTEME POUR RECEPTION ET/OU L'EMISSION AUTOMATIQUE D'INFORMATIONS RELATIVES A DES TRANSACTIONS**

(71) Demandeur: Gemalto SA, 92190 Meudon (FR)
(72) Inventeur: MULLER, Marc, 13881 GEMENOS Cedex (FR); GIBERT, Sylvie, 13881 GEMENOS Cedex (FR); BARBE, Serge, 13881 GEMENOS Cedex (FR)

(57) **Abrégé**

L'invention concerne un procédé pour la réception et /ou émission automatique d'informations (1) destinées ou liées à un détenteur d'un identifiant alphanumérique de compte (PAN, UID), ledit procédé comprenant une étape de création d'une adresse électronique (Email, URL) comprenant un identifiant (IDT), caractérisé en ce que l'identifiant (IDT) est obtenu ou dérivé à partir d'au moins une partie dudit identifiant alphanumérique de compte (PAN) ou associé à un compte (UID).

L'invention concerne également le système électronique correspondant.

## Description

### Domaine de l'invention.

L'invention concerne un procédé et un système pour la réception et/ou émission automatique d'informations relatives à des transactions effectuées et/ou relatives à un détenteur d'un numéro de compte, géré par un organisme financier ou d'une autre entité.

L'invention concerne plus particulièrement les transactions électroniques, notamment financières, telles que des achats qui peuvent être réalisés en ligne via internet sur des sites marchands, localement chez des commerçants à l'aide d'un terminal de paiement POS (Point of Sale Terminal en terminologie anglo-saxonne), des distributeurs automatiques de billets (DAB) ou ATM (Automatic Teller Machines en terminologie anglo-saxonne), des terminaux d'autoroute, des distributeurs automatiques de marchandises tels que carburant, boissons, etc., dans des restaurants d'entreprise, des magasins ....

L'invention concerne également l'émission automatique d'informations diverses de toute entité telles que des sociétés commerciales ou non commerciales auprès de détenteurs de compte.

### Art antérieur.

De telles transactions ci-dessus peuvent donner lieu à des impressions de tickets, reçus ou factures contenant des informations correspondant généralement aux détails des transactions. Toutefois, les informations peuvent comprendre toute autre type de données (ou de renseignements) utiles à l'utilisateur. Ces données peuvent être nécessaires comme preuve d'achat pour un remboursement, un retour de marchandise, un état des dépenses ou d'un solde de compte ou d'approvisionnement, des points de fidélité, etc.

Ces données ou informations sont relatives à un compte au sens large (bancaire, fidélité, accès...) peuvent être gérées localement par un ordinateur ou à distance par un serveur informatique communicant dédié à cet effet.

Par exemple, dans un terminal distributeur de billets (ATM), un client peut consulter ses dernières opérations bancaires, effectuer un virement, consulter le solde de son compte et obtenir, pour mémoire, un ticket papier comportant une impression des informations souhaitées ou consultées.

Chez un marchand, un restaurant, un client peut obtenir un ticket de caisse (ou une facture, un reçu) contenant les informations relatives à son achat de produit ou services ainsi qu'un ticket imprimé de la transaction bancaire destiné à être conservé comme preuve.

Par ailleurs, il est connu de recevoir de telles informations de facture, (ou reçu) sous forme électronique directement sur une adresse de messagerie du client, celle-ci ayant été au préalable enregistrée par le client chez le marchand ou autre fournisseur de services. Cette méthode requiert une opération de création de compte qui peut être contraignante pour un utilisateur ou client.

En outre, le client est immédiatement identifié à chaque transaction par le site marchand dans la mesure où son nom peut être associé à son numéro de carte bancaire et son adresse de messagerie. Le client perd ainsi de l'anonymat dans ses opérations vis-à-vis du site marchand.

On connait également la demande de brevet US2016012550 relative à des reçus électroniques. Elle décrit un procédé d''utilisation d'adresses de messagerie spécifiques à un domaine. Ainsi, par exemple, il décrit des adresses suivantes « jane.doe@filtroe.com » comprenant le nom d'un utilisateur « Jane doe » associé à un nom de domaine de messagerie « filtroe.com ». Le nom de domaine est contrôlé par un prestataire de services ou une entité effectuant une collecte des reçus électroniques, leur traitement et leur affichage.

Toutefois, ce procédé a l'inconvénient de requérir un enregistrement de l'utilisateur auprès de l'entité ci-dessus. Il requiert également que l'utilisateur déclare son adresse de messagerie auprès d'un marchand, détaillant local ou distant sur internet au préalable.

Alternativement à des solutions de l'art antérieur, comprenant notamment celle relative à une création de compte chez un site marchand en ligne sur internet, les inventeurs ont pensé stocker une adresse électronique d'un utilisateur, dans une carte bancaire. Cette adresse pourrait être stockée par un encarteur (fabricant de carte à puce) au cours d'une étape de personnalisation ordonnée par un organisme bancaire émetteur de la carte à puce.

La personnalisation pourrait prévoir également d'enregistrer une adresse de messagerie ou électronique de l'utilisateur qu'il convient au préalable de récolter auprès de lui. Une adresse électronique, adresse «e-mail» ou adresse courriel est une chaine de caractères permettant de recevoir du courrier électronique dans une boîte aux lettres informatique.

L'étape de personnalisation peut être graphique et/ou électrique. Elle peut permettre d'embosser la surface de la carte avec le numéro de carte bancaire (NCB) comprenant le numéro « PAN » (Primary Account Number en terminologie anglo-saxonne), d'imprimer un code CW, d'encoder une piste magnétique, d'enregistrer notamment un numéro de code secret dans la puce de la carte ainsi que d'autres données, clés de chiffrement, nom et prénom de l'utilisateur auquel est destinée la carte, durée de validité de la carte, etc.

Par contre, cette méthode de personnalisation de l'adresse de messagerie présente les inconvénients ci-après. Elle requiert une étape supplémentaire de recueil d'information de l'adresse de l'utilisateur (ou porteur) de carte de transaction et une étape supplémentaire de personnalisation. En outre, l'utilisateur peut être réticent à donner des informations relatives à une adresse de messagerie ou s'il ne souhaite pas un instant donné recevoir ses reçus électroniques par courriel.

En outre, l'utilisateur peut souhaiter déclencher ultérieurement ce service de reçu électronique et cela ne sera plus possible ou pas facile avec la carte, une fois qu'elle a été personnalisée. Cette méthode ne peut pas s'appliquer aux cartes existantes distribuées sur le terrain.

Un autre problème réside suite à un changement d'adresse de messagerie par le client. Dans ce cas, il n'est plus possible au client de recevoir ses reçus électroniques, la carte ayant stocké une autre adresse au cours d'une étape de personnalisation et/ou initialisation.

### Problème technique.

L'invention a pour objectif de résoudre les inconvénients susvisés. L'invention a pour objectif de proposer une manière simple et peu contraignante permettant à un utilisateur de recevoir des informations relatives à toute transaction électronique effectuée.

L'invention vise également à faciliter l'émission de toute information auprès d'un détenteur de compte matérialisé ou non par une carte ou objet portable.

L'invention propose un procédé simple dans lequel il n'y a pas besoin de connaître l'adresse de l'utilisateur ou du fournisseur de service à l'étape de personnalisation.

### Résumé de l'invention.

L'invention dans son principe selon un mode préféré prévoit de générer automatiquement des adresses électroniques (pour courriels, ou autre adresse URL de site internet..) avec le minimum de démarche de l'utilisateur. Ces adresses électroniques peuvent comprendre ou être dérivées de tout ou partie d'un identifiant propre ou spécifique à la carte (ou objet de transaction) elle-même.

Ainsi, pour une carte bancaire, l'identifiant peut être un numéro de carte bancaire comprenant le numéro « PAN » dont la structure est définie par le standard ISO/IEC 7812. L'invention peut concerner d'autres conventions de numéro de compte bancaire ou le standard ISO 9362 pour le code SWIFT ou IBAN selon l'ISO 13616. Le code IBAN comprend généralement le code BBAN (Basic Bank Account Number) comprenant un code IID (identification de l'établissement financier) et un code BAN (numéro de compte bancaire).

La structure du numéro de carte bancaire comprend généralement (dans les six premiers chiffres), un numéro d'identification de la banque (code « IIN » Issuer identification number ou code « BIN » (Bank Identification Number en termes anglo-saxons ou code SWIFT). Les autres chiffres ou numéro (PAN) permettent à la banque d'identifier ou retrouver un numéro de compte bancaire d'un client de la banque auquel est associée la carte.

Alternativement au numéro « PAN », l'invention peut prévoir d'utiliser un identifiant comprenant ou étant dérivé d'un numéro d'identification unique d'une puce électronique tel que son UID, comme dans les cartes RFID ou sans contact.

De préférence, la dérivation ci-dessus peut s'effectuer à l'aide d'un algorithme public ou de tout autre algorithme (ou règle) secret au choix de l'émetteur de la carte.

A cet effet, l'invention a pour objet un procédé pour la réception automatique dans une adresse électronique, d'informations destinées ou liées à un détenteur d'un identifiant alphanumérique de compte (IDT), ledit procédé comprenant une étape de création d'une adresse électronique comprenant un identifiant, caractérisé en ce que l'identifiant (IDT) est obtenu ou dérivé à partir d'au moins une partie dudit identifiant de compte (PAN) ou associé à un compte (UID).

Selon d'autres caractéristiques :
- L'identifiant IDT est choisi parmi un numéro comprenant le numéro (PAN) de dispositif de transaction électronique ou un identifiant (UID) de puce électronique de dispositif de transaction électronique ;
- L'adresse électronique est une adresse de messagerie électronique (Email) comprenant un nom d'utilisateur (NUT) et un nom de domaine (DOM), le nom d'utilisateur (NUT) comprenant tout ou partie de l'identifiant (IDT) ;
- Le nom de domaine (DOM) peut être lisible par le terminal de transaction électronique dans une mémoire d'un dispositif de transaction électronique ;
- Le nom de domaine (DOM) peut correspondre à un identifiant d'un fabricant du dispositif ou peut se déduire d'un code d'identification (IIN) d'un émetteur de carte dans un numéro de carte comprenant le numéro (PAN) ;
- Le nom de domaine (DOM) peut être mémorisé spécifiquement dans une puce électronique du dispositif de transaction ou dans une mémoire d'un terminal de transaction électronique en association avec une application de transaction ;
- Le terminal de paiement peut comprendre le terminal de paiement comprend un programme dont les instructions sont configurées pour composer une adresse électronique (email) à partir du nom de domaine (DOM) et du numéro de carte bancaire comprenant au moins le numéro (PAN) et pour envoyer des informations de la transaction effectuée, lors de l'exécution des instructions par un microcontrôleur du terminal ;
- Un terminal de paiement sans-contact d'un marchand peut comprendre un programme configuré pour composer une adresse électronique à partir de l'identifiant (UID) extrait d'une puce radiofréquence au cours d'une transaction radiofréquence et envoyer des informations de la transaction effectuée.
- Au moins un serveur récepteur des courriels (S1, S2) comprend un programme configuré (P2, P3) pour extraire l'identifiant de l'adresse du courriel reçu, pour retrouver l'utilisateur par correspondance et pour lui affecter ou lui faire parvenir le reçu électronique ;

En outre, l'invention concerne également un système électronique pour la réception et/ou émission automatique d'informations destinées ou liées à un détenteur d'un identifiant alphanumérique de compte (PAN, UID), ledit système comprenant un programme P1 de création d'une adresse électronique comprenant un identifiant. Le système est caractérisé en ce que le programme P1 comporte des instructions configurées pour obtenir ou dériver l'identifiant (IDT) à partir d'au moins une partie dudit identifiant alphanumérique de compte (PAN, UID).

Selon différentes variantes de réalisation, le système peut correspondre à ou constituer un objet ou dispositif de transaction électronique lié à un compte utilisateur, tel une carte à puce.

Alternativement ou cumulativement, le système peut comprendre ou être constitué d'un terminal de transaction ou d'un terminal associé à un ordinateur central gérant les transactions ou chargé d'une collecte des fonds notamment auprès d'organismes financiers.

Le système ci-dessus peut intégrer de préférence un serveur distant ou local géré par un fabricant de l'objet et/ou un organisme financier et/ou de télécommunication ou toute autre entité.

Le programme P1 peut également résider au moins en partie dans une carte à puce et/ou dans un terminal de transaction et/ou dans un serveur relié au terminal.

Selon d'autres caractéristiques :
- Le programme (P1) comporte des instructions exécutables par un microcontrôleur (5), lesdites instructions étant configurées pour extraire ou obtenir l'identifiant (IDT) parmi au moins une partie d'un numéro (NDC) comprenant le numéro (PAN) de dispositif de transaction électronique (10) ou d'un identifiant (UID) de puce électronique de dispositif de transaction électronique ;
- Le système comprend un serveur récepteur des courriels, ledit serveur comprenant au moins un programme P2, P3 configuré pour extraire l'identifiant (IDT) de l'adresse du courriel reçu, et/ou retrouver l'utilisateur à partir de l'identifiant (IDT) et d'une table de correspondance T1, T2 et pour faire parvenir à l'utilisateur des informations de transactions électronique.

L'invention a l'avantage d'offrir un service immédiatement applicable sur le terrain pour les cartes existantes ou compte existant.

Le titulaire de compte conserve son anonymat auprès du marchand ou autre société avec laquelle il a effectué une transaction électronique.

L'identifiant utilisé est déjà créé par une entité gestionnaire d'un compte client ou utilisateur.

Le service de réception automatique d'information est transparent pour le client et sans aucune démarche de sa part, autre que celle de création de compte lié au dispositif de transaction électronique.

### Brève description des figures.

- La figure 1 illustre un système conforme à un mode préféré de réalisation ou mise en oeuvre de l'invention, ce système pouvant être décliné en plusieurs sous-système 1A, 1B, 1C;
- La figure 2 illustre une carte bancaire montrant notamment le numéro d'identification de la carte bancaire comprenant le numéro « PAN » et le numéro « IIN » compris également dans le numéro de carte bancaire « NDC »;
- La figure 3 illustre schématiquement des éléments constitutifs matériels ou logiciels du système 1A de la figure 1, montrant un terminal 3 coopérant avec une carte bancaire 2 ;
- La figure 4 illustre schématiquement des éléments constitutifs matériels ou logiciels de la puce 12 de la carte bancaire 2 ;
- La figure 5 illustre des étapes d'un procédé et/ou programme P1 selon un mode de mise en oeuvre de l'invention pouvant s'effectuer au niveau du terminal 3;
- La figure 6 illustre des étapes d'un procédé et/ou programme complémentaire P2 / P3 au programme précédent P1, selon un mode préféré de mise en oeuvre de l'invention et pouvant s'effectuer de préférence au niveau d'un serveur S1 et/ou S2 d'un système 1B ou 1C de la figure 1;

### Description.

Une transaction électronique au sens du mode préféré de l'invention, doit être entendue principalement comme une transaction financière. Toutefois, elle peut s'entendre également au sens large comme tout échange de communication, conduisant notamment à un accès physique et/ou logique, accès à un système de transport, à un bâtiment, à un site internet, à un service de télécommunication, à un service de sécurité sociale, à un service fiscal d'un gouvernement pour une identification d'état civil, permis de conduire, passeport,...

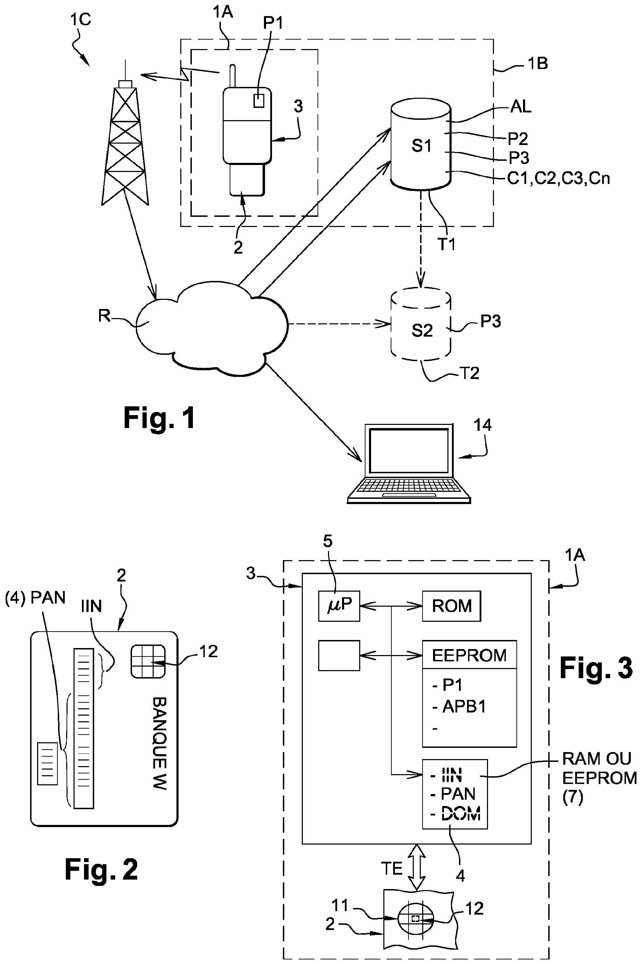

Sur les figures 1, 2 et 3, sont illustrés des systèmes 1A, 1B, 1C conformes à des modes préférés de réalisation ou de mise en oeuvre de l'invention. Ces systèmes sont destinés ou configurés pour la réception automatique d'informations (1) telles que celles décrites précédemment en introduction. Ces informations peuvent être liées ou générées à l'occasion d'une transaction électronique du type de celles décrites ci-dessus.

Dans l'exemple, le système comprend une carte bancaire 2 et un terminal bancaire 2 de paiement mobile (POS) chez un commerçant. Par définition, la carte bancaire comprend un numéro de carte comprenant un numéro PAN associé à un compte bancaire d'un utilisateur.

Alternativement (décrit par la suite), le numéro de carte bancaire peut être remplacé par un numéro d'identifiant unique UID de puce par exemple d'une carte ou d'un transpondeur sans-contact (qui peut être intégré dans une montre ou autre appareil électronique, badge.

Alternativement, le terminal 2 bancaire (POS) peut être substitué par un serveur (ordinateur local ou distant), d'accès direct ou d'accès distant via un réseau de télécommunication tel internet par différents protocoles de liaison tels WIFI, BLUETOOTH, LIFI, radiofréquence de proximité (NFC). Le serveur peut disposer d'interfaces de communication ou point d'accès pour échanger avec le dispositif de transaction 2.

Les informations visées ci-dessus sont destinées (ou liées) à un détenteur d'un identifiant alphanumérique de compte (PAN) ou d'un identifiant unique de puce UID associé à un compte client ou utilisateur. L'identifiant peut comprendre toute information notamment des chiffres et/ou des lettres et/ou des signes. Alphanumérique au sens de l'invention comprend des caractères qui peuvent être soit numériques (0 à 9), soit alphabétiques (A à Z),), soit codés par un autre signe conventionnel (., §, &, ...).

En l'occurrence dans l'exemple, les informations constituent celles comprises officiellement dans une facture électronique avec notamment identifiant du vendeur, de l'acheteur, de l'objet de l'achat, du montant de la transaction, de la TVA, le cas échéant, mode de règlement, acompte, date, lieu...

Le détenteur est ici un titulaire de la carte bancaire à puce électronique 2. Ce titulaire comporte de préférence une adresse de messagerie électronique personnelle qu'il ne souhaite pas communiquer à des commerçants accessibles via un ordinateur 14. Dans le cas contraire (sans messagerie électronique notamment provisoirement), le détenteur possède au moins une adresse postale qu'il ne souhaite pas non plus communiquer à des commerçants. Cette adresse postale au besoin peut remplacer l'adresse électronique pour permettre un acheminement des informations imprimées ou sur support mémoire, notamment en cas de panne de sa messagerie. Alternativement, le détenteur de carte peut être le titulaire d'une carte de fidélité, un titulaire de compte, un titulaire de carte de crédit à piste magnétique (sans puce EMV), un titulaire de carte d'accès à un prestataire de services comme une salle de sport, salle de yoga, parking (avec ou sans puce électronique), un titulaire de carte d'identité, un passeport électronique, une carte santé.

Dans certains cas, un identifiant unique peut être visible sur une carte ou tout objet dispositif de transaction électronique plutôt que dans une puce électronique.

L'identifiant 4, dans l'exemple, est un numéro PAN tel que celui figurant sur une face recto de carte bancaire 2 (fig. 2). Le numéro PAN est à la suite du numéro « IIN » d'identification de la banque émettrice.

Alternativement, l'identifiant IDT peut être créé à partir du numéro complet de carte bancaire ; Le cas échéant, il peut comprendre pour augmenter l'entropie ou sécurité de l'authentification de la carte, d'un numéro de cryptogramme variable fixe CVV ou variable DCVV ou tout autre information sur la carte.

De préférence, l'identifiant comprenant le PAN est intimement lié à un support et identifie ou authentifie le support (notamment carte ou autre objet portable, tel qu'un PAN vis à vis d'une carte bancaire ; La liaison (ou association) au support est telle sur le plan de la sécurité, qu'un identifiant constitue, de préférence, au sens de ce mode préféré, un identifiant de compte avant d'être parfois un identifiant de titulaire, (le compte étant lié à un titulaire de compte). Le compte peut déterminer des droits d'un titulaire, un crédit, un débit, des unités, un droit d'accès physique à un bâtiment, un droit d'accès logique à un service en ligne de chaine privé pour des émissions télévisées diverses de cinéma, de jeux, de sport...

Alternativement comme indiqué, l'identifiant peut être un UID mémorisé dans une puce électronique notamment sans-contact. L'UID est de préférence, par ailleurs, associé à un compte utilisateur dans un système de transaction électronique radiofréquence de proximité (NFC, RFID) (accès à réseau de transport, salle de sport, service de restauration).

Le système 1A, 1B, 1C selon ce mode préféré comprend également un programme P1 de création d'une adresse électronique (Email, URL) comprenant un identifiant;

Dans l'exemple, le programme P1 est compris dans une mémoire programme du terminal de paiement 3.

Alternativement, à l'égard de l'identifiant UID susvisé, le programme P1 peut être compris dans une mémoire programme d'un ordinateur central d'un système de collecte de droits tels que des tickets d'entrée ou des fonds financiers d'un réseau de transport ; L'ordinateur central peut être par exemple relié à un ensemble d'interface de communication de proximité NFC pour un contrôle ou une lecture de droits ou titres de transport.

Selon une caractéristique de ce mode préféré, le programme P1 comporte des instructions exécutables par un microcontrôleur ou microprocesseur du terminal 3 (ou serveur ou ordinateur central). Ces instructions informatiques peuvent être configurées pour traiter (utiliser et/ou exploiter et/ou extraire et/ou obtenir) l'identifiant (IDT)) notamment à partir d'au moins tout ou partie:
- 1) d'un numéro 4 lié à un compte (PAN) ou (PAN + IIN) du dispositif (ou carte) de transaction électronique 2 ;
- 2) ou d'un identifiant (UID) de puce électronique du dispositif de transaction électronique (2).

Dans l'exemple, le programme P1 est formé d'instructions exécutables par un microcontrôleur du terminal bancaire mobile 3.

Ces instructions informatiques, sont configurées pour extraire et/ou obtenir (et/ou utiliser et/ou exploiter) l'identifiant (IDT)) notamment à partir d'au moins tout ou partie du numéro 4 (PAN) de carte de transaction électronique 2. Cela est expliqué par la suite en relation à un exemple de mise en oeuvre au cours d'une transaction de paiement. L'extraction du numéro IDT s'effectue au cours d'une opération classique de lecture du numéro PAN (ou du numéro de carte bancaire NDC comprenant les numéros IIN et PAN) stocké dans la puce 6 de la carte à puce bancaire 2.

Le programme P1 peut par exemple effectuer une copie ou prélèvement du numéro PAN (ou IIN + PAN) stocké provisoirement, après lecture, dans une mémoire 7 tampon (RAM) du terminal 3 (ou EEPROM 7), avant d'être envoyé à un organisme financier (ex. matérialisé par S1 ou S2) pour mise à jour ou autorisation de la transaction. La mise à jour des transactions auprès d'un organisme financier peut être en temps réel au cours de la transaction ou différée dans le temps.

Le programme P1 peut prévoir un signal d'alerte (drapeau ou autre) dès que la mémoire RAM ou EEPROM (7) est remplie d'un nouveau numéro comprenant le PAN. Cette alerte parvient au microcontrôleur qui déclenche selon le programme P1 une extraction d'au moins le numéro 4 (PAN).

Le programme P1 comprend également des instructions qui permettent ensuite de construire ou créer l'adresse électronique (Email, URL) susvisée.

L'invention peut prévoir un des modes de fonctionnement ci-après. Selon une caractéristique d'un premier mode de réalisation, le système (2,3) comprend un dispositif de transaction électronique 2 (carte bancaire, objet ou accessoire portable) ; Ce dispositif 2 dispose d'une puce 12 de circuit intégré configurée pour effectuer classiquement une transaction électronique avec le terminal bancaire 3 par utilisation du numéro de carte bancaire comprenant le numéro (PAN) ;

Selon ce premier mode de réalisation de l'invention, la puce comprend également un nom de domaine préenregistré (DOM). Ce nom de domaine peut correspondre au nom de domaine d'un serveur ou ordinateur central et/ou plateforme d'une société de service quelconque notamment service financier d'une banque, et/ou serveur d'une société de personnalisation de carte bancaire et/ou serveur d'un encarteur de module à puce bancaire.

Ce nom de domaine DOM peut avantageusement correspondre à un site contrôlé et/ou géré par l'encarteur et/ou fabricant de l'objet ou dispositif électronique de transaction et/ou par une société de personnalisation.

Ainsi, grâce à l'invention, au cours d'une phase de fabrication, initialisation des puces électroniques des objets de transaction (ex. cartes), il est possible de prévoir un nom de domaine (DOM) stocké dès l'origine dans une mémoire ROM ou EPPROM ou flash. Ce nom de domaine peut correspondre à un nom du fabricant ou société de personnalisation ou d'organisme financier (IIN) écrit d'office dans l'objet (ex. carte).

Cela a l'avantage de s'affranchir de la connaissance au préalable au moins d'un nom de domaine particulier de tous les titulaires de compte.

Dans une forme 1B plus complexe du système de l'invention, selon un mode préféré, le système comprend un serveur S1 configuré pour recevoir des informations 1 de transaction ou liées à une transaction électronique TE. Le serveur S1 peut être mis en relation de communication avec le terminal 3 (et ou la puce) via un réseau R de télécommunication (internet, intranet, wifi, cellulaire...).

Un serveur S1, S2 comprend généralement au moins un ordinateur doté d'interface de communication et mis en réseau informatique via tout réseau de communication, d'unités de traitement à microprocesseur et de mémoires programme et unités de stockage de données.

Les informations peuvent être acheminées sous forme de courriels C1-Cn;
Le serveur S1 (ou ordinateur distant) peut comprendre un programme P2 dans une mémoire programme du serveur dont les instructions informatiques sont configurées pour retrouver l'utilisateur, (client ou titulaire) à partir de l'identifiant IDT. L'utilisateur peut être retrouvé par identification de ses coordonnées de liaison (nom, adresse postale, électronique...).

Alternativement, le serveur S1 peut réaliser simplement une opération minimale consistant à recevoir les informations 1 via des courriels C1-Cn et les stocker en mémoire au moins provisoirement.

Le système 1C peut prévoir un autre serveur ou ordinateur distant S2 relié à S1. Ce second serveur S2 peut être contrôlé par un organisme financier, le serveur S1 étant contrôlé par le fabricant du dispositif de transaction. Ce serveur S2 peut réaliser à la place de S1 tout ou partie des opérations assurées par S1 (qui à la limite peut assurer simplement une redirection de C1-Cn vers S2 sur demande ou périodiquement).

A cet effet, le programme P2 peut notamment prévoir d'effectuer une étape d'extraction pour retrouver l'utilisateur de compte pour extraire l'identifiant IDT de chaque adresse de courriel C1-Cn et d'une étape de correspondance entre IDT et le nom propre de l'utilisateur (client) via par exemple une table de correspondance pour lui affecter ou lui faire parvenir les informations 1.

Cet organisme financier peut donner accès à ce serveur S2 à ses clients pour leur permettre de consulter les informations relatives à leurs différentes transactions. Le serveur S2 (et/ou S1) peut être mis en relation de communication avec chaque titulaire (utilisateur) de compte via un ordinateur 14, ou téléphone portable, assistant personnel (PDA) et le réseau R pour lui permettre toute consultation de ses informations de transactions et/ou courriels mémorisées dans S1 et/ou S2 ou autres espaces de stockage reliés à S1 ou S2.

Le client peut ainsi accéder, par exemple, de manière sécurisée à son compte bancaire en ligne (via S2) et sélectionner une rubrique d'un nouveau service offert par sa banque tel que « gestion /consultation des factures », « gestion/consultation des abonnements de transport ».

Des options de traitement divers peuvent être offertes pour ces informations, ces factures, comme un calcul de cumul par marchand, par mois, etc. Ces informations peuvent être triées, traitées selon des paramètres de traitement prédéterminés au choix du client proposés dans S2.

Grâce à l'invention, le client peut également opter pour la réception/consultation d'offres promotionnelles expédiées par les marchands à des adresses électroniques rendues anonymes par l'invention vis-à-vis des marchands ou autre entité.

Alternativement, des adresses URL peuvent être utilisées à la place des adresses de courriel. Ces adresses URL peuvent être de type anonyme (sans publicité du titulaire de l'adresse URL).

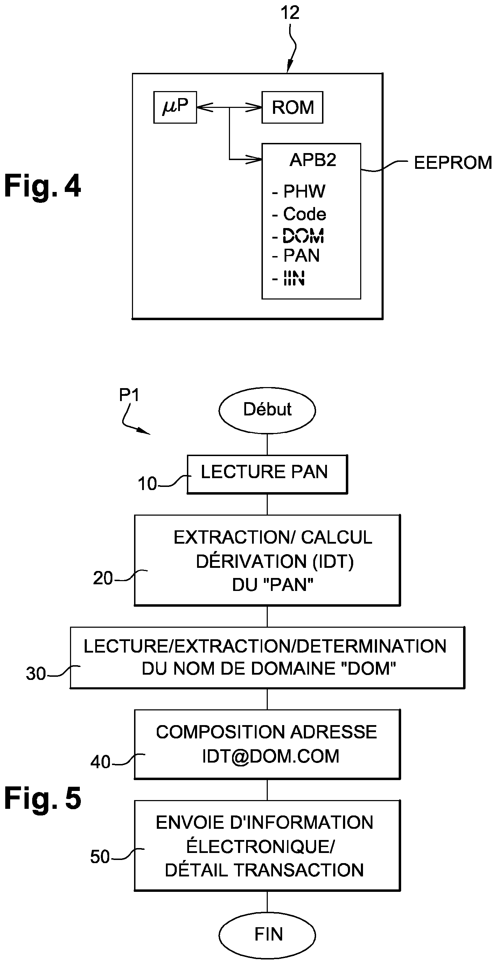

Sur les figures 3 et 4, est illustré selon un mode préféré, un exemple des constituants de la puce 12 de la carte bancaire (ou dispositif) 2. La puce est reliée à une interface de communication à plages de contact 11. Elle peut toutefois prévoir une interface radiofréquence.

La puce 12 peut comprendre de manière classique une application de transaction APB2, notamment bancaire de préférence de type EMV d'un organisme financier.

La puce peut comprendre un microprocesseur µP, des mémoires ROM, et EEPROM, au moins un numéro de compte bancaire PAN (ou NDC : IIN + PAN) mémorisé à demeure, un code secret (Code ) ou Code PIN destiné au titulaire pour confirmer la transaction. La puce peut comprendre également selon un mode préféré, un nom de domaine internet « DOM » qui a pu être mémorisé au cours d'une étape de personnalisation électrique ou même avant par masque en mémoire permanente ROM par un fabricant de puce électronique. Alternativement, le nom de domaine DOM peut utiliser tout ou partie du numéro IIN (identifiant la banque).

En général dans les dessins, des alternatives ou options de présence de numéro ou d'informations dans une mémoire sont indiqués en pointillés comme figure 4 ou 7.

A la figure 5, est représenté un organigramme qui illustre un mode préféré de mise en oeuvre des étapes d'un procédé et/ou d'un programme P1 pour la réception automatique d'informations 1 à une adresse électronique comprenant un identifiant (IDT). Les informations sont ici relatives à un achat dans un magasin à l'aide d'une carte 2 bancaire et d'un terminal bancaire 3.

Les informations sont destinées ou liées à un détenteur d'un identifiant alphanumérique de compte, ici un titulaire de la carte bancaire 2; Les informations correspondent au contenu d'une facture.

L'organigramme illustre des étapes pour la création ou la génération de l'adresse électronique (Email, URL) ; Dans l'exemple (fig.5), le procédé prévoit de créer une adresse de courriel comme ci-après.
- A l'étape 10, le titulaire d'un compte bancaire, possède une carte de paiement bancaire 2 qu'il introduit dans un terminal POS, 3 d'un marchand ; Le numéro de carte bancaire comprenant le numéro PAN (ou IIN + PAN) (lié à un compte utilisateur), figure sur un embossage de la carte et dans une puce certifiée EMV et le cas échéant sur la piste magnétique au verso de la carte. Au cours de la transaction classique EMV, le terminal procède classiquement à une première lecture du numéro PAN (ou d'un numéro comprenant le PAN : IIN + PAN) mémorisé dans la puce. Le Numéro de Carte Bancaire « NDC » comprenant le PAN, est égal par exemple à 3331434288896655 (notamment de manière à demander une autorisation de transaction à la banque émettrice) ;
- A l'étape 20, le programme P1 du lecteur du terminal 3, procède à une extraction / calcul ou à une dérivation du numéro de carte bancaire comprenant le PAN; Par exemple, un algorithme spécifique du terminal traduit le numéro comprenant le PAN ci-dessus en numéro modifié, dérivé en numéro « 3331XXXXYYYY6655 »

Alternativement, l'algorithme ci-dessus et/ou un numéro comprenant le PAN altéré est mémorisé dans la puce 12. Ces derniers peuvent être connus et mémorisé dans un serveur d'organisme financier pour suivre les évolutions /altérations successives du numéro à la manière des numéros à usage unique OTP.
- A l'étape 30, le programme P1 effectue également une seconde lecture ou extraction ou détermination d'un nom de domaine DOM mémorisé en mémoire EEPROM de la puce 12 de la carte bancaire;
- A l'étape 40, le programme P1 effectue une composition d'une adresse de courriel de structure générale « IDT@DOM.COM ». A cet effet, selon un mode de mise en oeuvre et/ou de réalisation, le terminal 3 crée ensuite le numéro dérivé « 3331XXXXYYYY6655 » qui dérive de préférence du numéro NDC comprenant le PAN (ou du PAN).

Puis, le programme P1 associe ce numéro dérivé à un nom de domaine préétabli tel «servicesociété.com » pour créer de manière automatique une adresse électronique ci-après: «3331XXXXYYYY6655@serviceSociété.com ».

Grâce à l'invention, cette adresse est ainsi associée à la carte de manière intrinsèque (sans faire référence à une adresse personnelle d'utilisateur).

L'invention peut prévoir des alternatives ci-après.

Alternativement, le nom de domaine peut être stocké préalablement à la transaction dans le terminal bancaire qui comprend (fig.3) une application bancaire APB1. Ce nom de domaine DOM a pu être téléchargé, provisionné ou mis à jour à distance avec l'application bancaire APB1 notamment de type EMV.

Ainsi, pour chaque type ou émetteur de carte bancaire, l'invention peut prévoir un nom de domaine spécifique stocké dans le terminal de paiement. Le terminal peut stocker par exemple 10 à 50 noms de domaine.

Le procédé peut prévoir d'opérer de la manière alternative ci-après. Lorsque le terminal 3 lit la carte bancaire et reconnaît un émetteur de carte (banque W), et le programme P1 du terminal compose alors l'adresse électronique à partie du « PAN » (ou dérivé tel qu'un jeton, « token ») et le nom de domaine DOM de l'émetteur de carte préalablement stocké est reconnu grâce au programme P1.

Alternativement encore, le procédé peut prévoir une lecture d'identifiant sous forme D'IUD ou autre identifiant intrinsèque de la carte même en appliquant un algorithme prédéterminé ;
- A l'étape 50, le terminal a terminé la transaction et en application du programme P1, il envoie ensuite les informations 1, en l'occurrence la facture correspondante (ou le reçu électronique avec le détail de la transaction) sous forme d'un courriel C1-Cn ou en pièce jointe d'un courriel C1-Cn à l'adresse électronique ainsi dérivée «3331XXXXYYYY6655@servicesociété.com ».

Alternativement, la facture peut être mémorisée dans le terminal 3 en relation avec l'adresse du courriel pour une consultation ultérieure ou pour une remontée de l'ensemble des données en fin de journée ou autre moment à la banque et/ou au server S1 (et/ou S2).

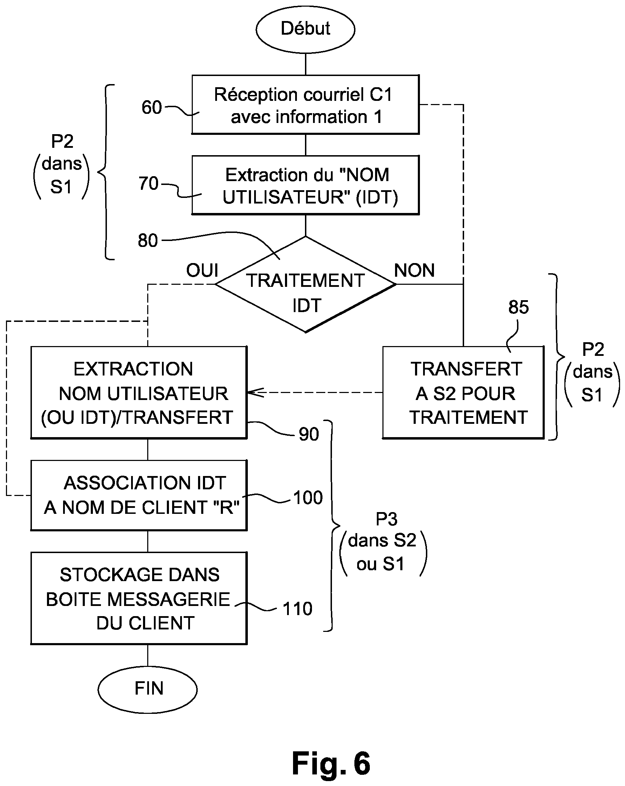

A la figure 6, est illustré un organigramme décrivant la réception et/ou traitement des courriels C1-Cn reçus du terminal 3 selon des étapes de procédé et/ou de programme P2, P3;
- A l'étape 60, le courriel C1 est ainsi reçu par un serveur de messagerie S1 du domaine « DOM » ou « servicesociété.com » ou « servicebanque.com ». Le programme P2 peut comprendre des instructions (ou code informatique) configurées pour recevoir et/ou accepter ou refuser les courriels selon différents critères ou filtre.

Les critères permettent notamment de déterminer si les courriels correspondent ou non à un format prédéterminé ou à une adresse électronique valide ou pas d'un utilisateur / client de la banque. En cas d'admission, le serveur S1 peut alternativement à son tour traiter le courriel C1 en fonction des besoins ou le transmettre directement à un autre serveur S2 (étape 85).
- A l'étape 70 le programme P2 peut effectuer une opération d'extraction / détermination de tout ou partie de l'identifiant de compte « PAN » (ou de préférence de celui dérivé du numéro de compte réel PAN).
- A l'étape 80 de test, le programme P2 peut déterminer si S1 prévoit ou non un traitement de l'identifiant IDT.

Si NON (pas traitement dans S1), P2 peut identifier l'émetteur de carte notamment par comparaison dans une table de correspondance entre des noms d'émetteurs de carte (banques) et leur identifiant compris dans le PAN ou IDT; Puis, P2 dans S1 peut transférer (branche transfert 85) le courriel C1-Cn à un serveur S2 appartenant ou éventuellement contrôlé par l'émetteur de la carte bancaire 3 (banque W). Ce serveur S2 procède ensuite aux étapes 90, 100, 110 d'un programme P3 qui aurait pu être exécuté alternativement par S1.

Si OUI, (traitement dans S1), le programme P2 passe à l'étape 90 (ou directement à 100 si l'opération de l'étape 90 a déjà été effectuée à l'étape 70).

Si nécessaire, le programme P2 met en oeuvre un sous-programme ou algorithme AL pour déterminer le PAN réel à partir du PAN dérivé.
- A l'étape 90 le serveur S1 peut effectuer le même traitement qu'à l'étape 70 ou passer à l'étape 100 ci-après;
- A l'étape 100, le serveur S1 (ou S2) peut effectuer, en exécutant un programme P3 contenu dedans, une association du courriel C1, soit avec une adresse électronique de l'émetteur de la carte (organisme bancaire) et/ou directement une boîte de messagerie du client (ou utilisateur).

A cet effet, le serveur S1 (ou S2) peut comprendre une table de correspondance T2 ou équivalent pour faire une correspondance entre le PAN extrait et une adresse personnelle de messagerie d'un client ou une adresse auprès d'un organisme bancaire.
- A l'étape 110, les courriels « Cn » peuvent ensuite être transférés à la messagerie du client de manière anonyme et y être mémorisés. Puis, le programme se termine.

De manière générale, l'invention apporte les fonctions et/ou avantages ci-après.

Avantageusement, grâce à l'invention, le client (titulaire) peut à tout moment consulter ses courriels relatifs à ses transactions effectuées et reportés sur son site bancaire ou serveur S2 lié au site bancaire S2 notamment dans une boîte de messagerie associée à son compte bancaire, créée automatiquement lors de l'ouverture de son compte bancaire par l'organisme financier.

Le client n'a pas besoin d'avoir une messagerie personnelle en plus de celle existante créée par l'organisme financier. Il peut consulter ses achats via tous les reçus ou factures électroniques réceptionnés par son organisme financier, notamment via un accès de compte utilisateur en ligne notamment bancaire.

Les informations (reçus ou factures) électroniques peuvent être accessibles à travers la mise en oeuvre d'un procédé ou d'un mécanisme de sécurité d'accès en écriture et/ou lecture. Ainsi par exemple, ils peuvent être stockés sous une forme chiffrée. Un code personnel peut être demandé par le serveur S2 de l'organisme financier pour rendre lisible les reçus électroniques.

Alternativement, l'utilisateur peut recevoir une instruction du serveur S2 pour lui demander d'introduire une carte ou une clé USB (ou tout dispositif matériel ou hardware) contenant des clés de déchiffrement des courriels de reçus ou factures électroniques rendus accessibles par le serveur de l'organisme financier. L'utilisateur peut déclencher ou utiliser des fonctions proposées du serveur S2 pour un traitement ou une gestion de ses informations contenues dans ses reçus électroniques comme un classement par date, par montant, par marchand, par période.

Le cas échéant, le client, marchand ou une entité peut recevoir d'autres types d'information (non relative directement à ses propres transactions électronique). Par exemple, il peut recevoir des informations promotionnelles, informatives, évènementielles d'une entité, auprès de laquelle le client a effectué au moins une transaction (ou envisage de faire une transaction à l'avenir).

De même, l'invention permet, pour tout un marchand ou entité d'émettre tout type d'information et/ou de communication diverses (promotion, événement, invitation, ...) à des personnes dont elle connait un identifiant collecté au cours d'une transaction quelconque (et non relative directement aux propres transactions électronique des personnes telles que des factures).

Pour l'entité, il lui suffit de connaître ou d'avoir l'algorithme AL à partir duquel est composée l'adresse électronique d'une personne comportant un compte utilisateur. S'il peut s'agir du code UID ou du PAN. Cet algorithme peut être stocké dans un terminal de paiement, et/ou un ordinateur central notamment de collecte de fonds monétaires d'un service de transport.

Alternativement, l'entité peut envoyer les informations 1 à transmettre à un serveur géré par un organisme tiers comme l'encarteur de carte bancaire ou par un organisme financier (ou autre auprès duquel l'utilisateur a un compte financier (ou autre tel fidélité, d'accès...).

Le serveur S1 (ou S2) retrouve l'adresse de la personne à partir des identifiants IDT et le cas échéant l'algorithme inverse AL ; Ensuite, une fonction de correspondance des identifiants avec les adresse électronique des personnes utilisatrices permet de retrouver les adresses visées par toute entité désireuse de faire parvenir des informations de toute nature.

L'utilisateur peut autoriser ou décliner ce service d'intermédiaire, notamment en l'indiquant dans le serveur S1 et/ou S2 dans un champ d'une mémoire du serveur dédiée aux préférences des utilisateurs.

Le client peut sélectionner cette fonction sur le site de son organisme financier (ou autre) S2 pour autoriser ou permettre une lecture de toute information provenant des marchands ou entités sélectionnés.

Le client peut affiner le type d'information qui l'intéresse par rapport à chaque marchand ou entité. Ainsi, le site ou serveur de l'organisme financier peut servir d'intermédiaire de confiance pour un client ou utilisateur de carte ou compte de transaction électronique notamment financière.

De la même manière, un client ou utilisateur peut rentrer en contact avec un marchand de manière anonyme en effectuant les opérations inverses des étapes du procédé décrit ci-dessus. Par exemple, un client envoie un courriel de demande d'information à destination d'un marchand via le serveur S2 (ou S1) qui le transmet au marchand de manière anonyme en remplaçant l'adresse email du client par une adresse composée du PAN (ou d'un dérivé du PAN) et du nom de domaine du serveur S2 (ou S1).

Le site ou serveur de l'organisme financier permet de faire un filtre ou un barrage des informations au choix du client ou utilisateur.

Le site ou serveur S1 ou S2 permet d'organiser, traiter, exploiter l'ensemble des informations disponibles reçues des marchands ou autre entités. Par exemple, le site propose un affichage d'informations disponibles sur un tableau notamment de type Excel.

Ainsi, l'anonymat de l'utilisateur vis-à-vis de chaque site marchand est conservé ;
En outre, il n'y a pas d'opération supplémentaire de création de compte auprès de chaque marchand, ni de démarche d'enregistrement auprès d'un serveur de tiers ou d'entité gérant un service d'exploitation des informations (à l'exception de l'organisme financier gestionnaire de compte détenant déjà à l'occasion de l'ouverture d'un compte bancaire, des données d'identification et de contact par messagerie électronique).

Ce serveur intermédiaire S1, peut être proposé comme un service de société de service vis-à-vis de l'émetteur de la carte (organisme financier). La société de service peut être l'encarteur même de la carte bancaire ou la société effectuant la personnalisation électrique et/ou graphique de la carte.

L'invention peut de la même manière s'appliquer à des transactions de transport sans-contact. La transaction consiste par exemple à permettre un accès à l'aide d'un terminal de porte d'accès à un réseau de transport.

Selon cette alternative relative à l'identifiant unique de puce UID, le titulaire présente son objet sans-contact à un lecteur d'accès. L'objet a notamment une fonction sans-contact (carte sans contact, bracelet électronique, téléphone mobile en émulation carte sans contact, tout objet portable, ticket RFID).

Une fois, l'opération effectuée, le système de transport local ou centralisé compose sensiblement de la même manière que pour le PAN, un courriel C1 dont le nom utilisateur est dérivé ou comprend tout ou partie du numéro IUD mémorisé dans la puce sans contact. Pour le nom de domaine, le système reconnaît le type de puce dont il s'agit, ainsi que le protocole de communication et l'émetteur de l'objet.

Le système de transport peut lire un nom de domaine DOM, soit préétabli dans la puce dans l'UID, soit mémorisé dans un ordinateur local ou central du système.

Le système de transport compose le courriel sensiblement de la même manière que pour le PAN et procède à l'expédition d'une facture ou reçu électronique à l'adresse ainsi composée.

## Revendications

1. Procédé pour la réception automatique d'informations (1) destinées ou liées à un détenteur d'un identifiant alphanumérique de compte (PAN, UID), ledit procédé comprenant une étape de création d'une adresse électronique (Email, URL) comprenant un identifiant (IDT), **caractérisé en ce que** l'identifiant (IDT) est obtenu ou dérivé à partir d'au moins une partie dudit identifiant alphanumérique de compte (PAN) ou associé à un compte (UID).

2. Procédé selon la revendication précédente, **caractérisé en ce que** ledit identifiant (IDT) est choisi parmi un numéro (PAN) de dispositif de transaction électronique ou un identifiant (UID) de puce électronique de dispositif de transaction électronique.

3. Procédé selon l'une des revendications précédentes, **caractérisé en ce que** l'adresse électronique est une adresse de messagerie électronique (Email) comprenant un nom d'utilisateur (NUT) et un nom de domaine (DOM), le nom d'utilisateur (NUT) comprenant tout ou partie de l'identifiant (IDT).

4. Procédé selon l'une des revendications précédentes, **caractérisé en ce que** le nom de domaine (DOM) est lisible par le terminal de transaction électronique dans le dispositif de transaction électronique.

5. Procédé selon l'une des revendications précédentes, **caractérisé en ce que** le nom de domaine (DOM) correspond à un identifiant d'un fabricant du dispositif ou se déduit d'un code d'identification (IIN) d'un émetteur de carte dans un numéro de carte comprenant le numéro de compte (PAN).

6. Procédé selon l'une des revendications précédentes, **caractérisé en ce que** le nom de domaine (DOM) est mémorisé spécifiquement dans une puce électronique du dispositif de transaction ou dans une mémoire d'un terminal de transaction électronique en association avec une application de transaction.

7. Procédé selon la revendication 3, **caractérisé en ce que** le terminal de paiement (3) comprend un programme (P1) dont les instructions sont configurées pour composer une adresse électronique (email) à partir du nom de domaine (DOM) et du numéro de carte bancaire comprenant au moins le numéro (PAN) et pour envoyer des informations de la transaction effectuée.

8. Procédé selon la revendication 3, **caractérisé en ce qu'**un terminal de paiement sans-contact d'un marchand comprend un programme configuré pour composer une adresse électronique à partir de l'identifiant (UID) extrait d'une puce radiofréquence au cours d'une transaction radiofréquence et envoyer des informations de la transaction effectuée.

9. Procédé selon l'une des revendications précédentes, **caractérisé en ce qu'**au moins un serveur récepteur des courriels (S1, S2) comprend un programme configuré (P2, P3) pour extraire l'identifiant de l'adresse du courriel reçu, pour retrouver l'utilisateur par correspondance et pour lui affecter ou lui faire parvenir le reçu électronique.

10. Système électronique pour la réception et/ou émission automatique d'informations (1) destinées ou liées à un détenteur d'un identifiant alphanumérique de compte (PAN, UID), ledit système comprenant un programme (P1) de création d'une adresse électronique (Email, URL) comprenant un identifiant (IDT),
**caractérisé en ce que** le programme P1 comporte des instructions exécutables par un microcontrôleur (5) et configurées pour obtenir ou dériver l'identifiant (IDT) à partir d'au moins une partie dudit identifiant alphanumérique de compte (PAN, UID).

11. Système selon la revendication précédente, **caractérisé en ce que** ledit programme (P1) comporte des instructions exécutables par un microcontrôleur (5), lesdites instructions étant configurées pour extraire ou obtenir l'identifiant (IDT) parmi au moins une partie d'un numéro de carte comprenant au moins le numéro (PAN) de dispositif de transaction électronique (10) ou d'un identifiant (UID) de puce électronique de dispositif de transaction électronique.

12. Système selon la revendication précédente **caractérisé en ce qu'**il comprend un dispositif de transaction électronique (2) comprenant une puce de circuit intégré (12) configurée pour effectuer une transaction électronique et un terminal bancaire (3) comprenant ledit programme (P1) pour effectuer une transaction avec ledit dispositif (2) par utilisation d'un numéro de carte bancaire comprenant au moins le numéro (PAN), ladite puce comprenant un nom de domaine préenregistré (DOM).

13. Système selon la revendication précédente, **caractérisé en ce qu'**il comprend un serveur récepteur des courriels (S1, S2), ledit serveur comprenant un programme (P2, P3) configuré pour extraire l'identifiant (IDT) de l'adresse du courriel reçu, et/ou retrouver l'utilisateur à partir de l'identifiant (IDT) et d'une table de correspondance (T1, T2) et pour faire parvenir à l'utilisateur des informations de transactions électronique.
